# EUROPEAN PATENT APPLICATION

(11) **EP 1 923 122 A1**
(43) Date of publication of application: **21.05.2008**
(21) Application number: 07021112.3
(22) Date of filing: 29.10.2007
(51) Int. Cl.: B01D 53/14, B01D 53/70, B01D 53/75, B01D 53/68

(54) **Treatment of effluent containing chlorine-containing gas**

(30) Priority: 27.10.2006 US 553894
(71) Applicant: Applied Materials, Inc., Santa Clara, CA 95054-3299 (US)
(72) Inventor: Moalem, Mehran, Cupertino, CA 95014 (US); Farnia, Morteza, Campbell, CA 95008 (US)
(74) Representative: Zimmermann, Gerd Heinrich

(57) **Abstract**

A substrate processing apparatus (100) comprises a process chamber (110) and an effluent treatment apparatus (300) comprising a hydrogenation reactor (310), scrubber (320), combustor (330), and a controller (200) to operate the process chamber and effluent treatment apparatus. In the hydrogenation reactor, hydrogen-containing gas is used to treat chamber effluent to form a hydrogenated effluent comprising hydrogen chloride gas. A scrubber sprays water through the hydrogenated effluent to dissolve the hydrogen chloride gas. An oxygen-containing gas is added to the treated effluent during a combustion step to further abate the effluent.

## Description

### BACKGROUND

The present invention relates to the treatment of effluent containing chlorine containing gas, and more specifically to the treatment of an effluent which is generated during substrate fabrication processes.

Chlorine-containing gases are used in, or formed as a byproduct of, substrate fabrication processes. For example, when depositing or etching materials on substrates such as semiconductor wafers and displays, various compositions of process gas comprising chlorine-containing gases can be used. For example, chlorine-containing gases such as Cl₂ and BCl₃ are often used to etch aluminum. As another example, chlorine-containing gases are added to fluorinated gases in the etching of oxide materials, such as silicon oxide. As yet another example, chlorine-containing gases such as aluminum chloride are used for the epitaxial deposition of aluminum. In these fabrication processes, the effluent gas released from the process chambers often contains high levels of chlorine-containing gases which have to be removed from the effluent gas before it is released to the environment.

Further problems arise when the effluent also contains other gases, such as hydrocarbon gases, which also have to be removed from the effluent. For example, next generation etching processes often use a process gas comprising chlorine-containing gases and hydrocarbon gases to etch features having smaller dimensions in the silicon dioxide material on a substrate. As another example, chlorine-containing gases and hydrocarbons such as Cl₂, BCl₃, CH₄, HCl, C₂H₂ and C₂H₆, are used as precursor gases in etching processes. The hydrocarbon gases can be removed by heating the effluent in an oxygen environment to temperatures of from about 600°C to about 1100°C to burn off the hydrocarbon precursors. However, these high temperatures are undesirable because they can result in the formation of toxic byproducts such as dioxins.

Several methods have been developed to reduce the concentration of chlorine-containing gases and other gases in the effluent. In one example, the effluent gas can be passed through a scrubber which sprays water through the effluent gas to dissolve the chlorine-containing gases to form water soluble chlorine acids. The acids are liquids that are more easily removed, and thus, the treated effluent has a reduced amount of chlorine and chlorine-containing compounds. However, the problem with scrubbing systems is that they do not sufficiently extract all of the chlorine-containing gases.

As another example, effluent is treated in a plasma to reduce the hazardous content of the effluent, for example, as described in U.S. Patent No. 6,673,323 issued to Bhatnagar et al., entitled "Treatment of Hazardous Gases in Effluent", which is incorporated by reference herein in its entirety. However, heating or plasma treatment of effluent comprising hydrocarbon and chlorine-containing gases can cause the gases to react to form hazardous dioxin materials. Dioxin is the popular name for the family of halogenated organic compounds, the most common consisting of polychlorinated dibenzofurans (PCDFs) and polychlorinated dibenzodioxins (PCDDs). The basic structure of PCDFs and PCDDs comprises two benzene rings joined by either a single (furan) or a double oxygen bridge (dioxin). Chlorine atoms are attached to the basic structure at any of 8 different places on the molecule, numbered from 1 to 8. Dioxins have serious adverse health effects on humans. In concentrations as low as a few parts per trillion, dioxins such as polychlorinated dibenzofurans (PCDFs) and polychlorinated dibenzodioxins (PCDDs) have been shown to bioaccumulate in humans and wildlife due to their lipophilic properties.

Thus, it is desirable to treat effluent gas from a substrate processing chamber to reduce both chlorine-containing gases as well as hydrocarbon gases. It is further desirable to reduce or entirely eliminate the formation of dioxins in the treatment of effluent, before releasing the effluent into the environment.

### SUMMARY OF THE INVENTION

The aforementioned problems are at least partly solved by a method as laid out in claim 1 and a substrate processing apparatus as laid out in claim 9. Further aspects, details, features and embodiments are evident from the dependent claims, the description and the accompanying drawings.

A method of processing a substrate and treating an effluent comprising hydrocarbon gas and chlorine-containing gas is provided. The method comprises the steps of: exposing a substrate to a plasma of a process gas comprising a hydrocarbon gas and a chlorine-containing gas, exhausting from the process zone, a chamber effluent comprising unreacted process gas comprising the hydrocarbon gas and the chlorine-containing gas, exposing the chamber effluent to hydrogen-containing gas to form a hydrogenated effluent comprising hydrogen chloride gas, scrubbing the hydrogenated effluent with water to dissolve the hydrogen chloride gas in the water to form a scrubbed effluent that is substantially absent hydrogen chloride gas and combusting the scrubbed effluent by heating the scrubbed effluent while adding an oxygen-containing gas to form a treated effluent.

A substrate processing apparatus capable of processing substrate and treating an effluent including hydrocarbon gas and chlorine-containing gas comprises a process chamber housing, an effluent treatment apparatus, and a controller to operate the process chamber and the effluent treatment apparatus. The process chamber housing comprises a housing enclosing a substrate support, a gas distributor to introduce process gas such as hydrocarbon gas and chlorine-containing process gas into the housing, a plasma generator to form a plasma of the process gas and a gas exhaust port to remove chamber effluent comprising unreacted process gas from the housing. The effluent treatment apparatus comprises a hydrogenation reactor comprising an enclosure, an inlet to receive the chamber effluent from the gas exhaust port of the process chamber, and an additive gas port to introduce a hydrogen-containing gas into the hydrogenation reactor to form a hydrogenated effluent comprising hydrogen chloride gas; a scrubber comprising an enclosure, an inlet to receive the hydrogenated effluent, and a water spray to spray water through the hydrogenated effluent to dissolve the hydrogen chloride gas into the water to form a scrubbed effluent; and the combustor comprising an enclosure, an inlet to receive the scrubbed effluent, an additive gas port to introduce an oxygen-containing gas into the combustor, and a heater to heat the combustor. The controller operates the process chamber and effluent treatment apparatus to process a substrate and treat the chamber effluent.

### DRAWINGS

These features, aspects and advantages of the present invention will become better understood with regard to the following description, appended claims and accompanying drawings which relate to embodiments of the invention. However, it is to be understood that each of the features can be used in the invention in general, not merely in the context of the particular drawings, and the invention includes any combination of these features, where:
FIG. 1 is a schematic block diagram of an embodiment of an effluent treatment apparatus;
FIG. 2 is a schematic diagram of an embodiment of a substrate processing chamber; and
FIG. 3 is an illustrative block diagram of a hierarchical control structure of a specific embodiment of a computer program according to the present invention.

### DETAILED DESCRIPTION

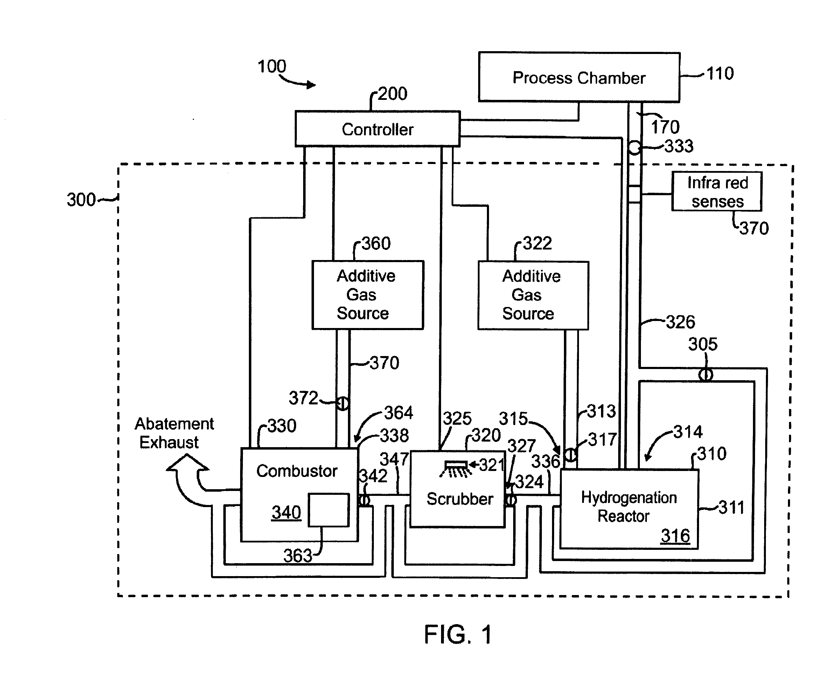

An effluent generated in the processing of a substrate, or the cleaning of a substrate processing chamber, is treated in an effluent treatment apparatus 300. A simplified diagram of an exemplary embodiment of an effluent treatment apparatus, as shown in FIG. 1, comprises a hydrogenation reactor 310, a scrubber 320 and a combustor 330. The hydrogenation reactor 310 comprises an enclosure 311 having a hydrogenation zone 316 and an inlet 314 to receive a chamber effluent from the gas exhaust port 170 of the process chamber 110. The inlet 314 is connected to the gas exhaust port 170 of the process chamber 110 by a vacuum foreline 326. Notably, the hydrogenation reactor 310 may be placed upstream or downstream of a process chamber pump (not shown) which is connected to the process chamber 110. While a particular embodiment of an effluent treatment apparatus 300 is described to illustrate the effluent treatment process, it should be understood that the effluent treatment apparatus 300 can have other forms and configurations as would be apparent to one of ordinary skill in the art.

The enclosure 311 of the hydrogenation reactor 310 is composed of a gas impermeable material, such as a ceramic or metal material. In one version, the enclosure 311 is a cylinder composed of a ceramic material such as Al₂O₃. The cylinder has sufficient strength to withstand operating vacuum type pressures of up to about 740 Torr. The cylinder can have a diameter of at least about 10 mm and more preferably, at least about 200 mm. Advantageously, the cylinder can be oriented linearly to the direction of flow of effluent through the reactor 310 to reduce possible backflow of effluent that can occur through obstructions of the effluent path through the reactor 310. Thus, the cylinder has a longitudinal central axis that is oriented parallel to the direction of the flow path of effluent. The length of the reactor 310 is sufficiently long to allow the effluent to remain resident in the cylinder for a time period that is sufficient to convert substantially all of the unreacted precursors and by-products in the effluent to soluble hydride species. The precise length of the reactor 310 depends on a combination of factors including the diameter of the exhaust tube (not shown), the composition and peak flow rate of the effluent, and the power level applied to the abatement plasma. For an effluent comprising Cl₂ at a total flow of about 100 sccm, a sufficient resident time is at least about 0.1 seconds, and more preferably about 2 seconds. A suitable length of reactor 310 that provides such a residence time, comprises a cylindrical tube 304 having a cross-sectional diameter of 200 mm, and a length of from about 10 cm to about 50 cm. In one version, a bypass valve 305 may be provided in or near the reactor to control the flow of effluent into, or to bypass, the hydrogenation reactor. The bypass valve 305 may optionally be under the control of the controller 200.

The hydrogenation reactor 310 further comprises an additive gas port 315 to introduce an additive gas comprising a hydrogen-containing gas into the hydrogenation reactor 310. The additive gas source 322 is connected to the reactor 310 via a conduit 313. Optionally, the flow of gas could be controlled with a control valve 317. The operation of the control valve may be under the control of a controller 200 or it may be operated by hand.

The additive gas source 322 provides an additive gas comprising a hydrogen-containing gas to the effluent gas, before or after the effluent is energized, to enhance the conversion of unreacted precursors and by-products to soluble hydride species. In one example, hydrogen-containing gas is introduced into the reactor in the absence of oxygen, to form a hydrogenated effluent comprising hydrogen chloride gas. The hydrogen chloride gas is removed by a wet scrubber 320 located downstream in the effluent treatment apparatus 300. The addition of even a small amount of additive gas to the effluent gas can significantly improve abatement efficiency.

In one version, the additive gas comprises a hydrogen-containing additive gas comprising H₂. In the reactor 310, the effluent and the additive gas are reacted as described above. Disassociated hazardous gases, such as Cl₂, are hydrogenated in the plasma and converted to reaction products, such as HCl, that are treatable for safe exhaustion. For example, the HCl can be scrubbed and then safely exhausted. It should be understood that other hydrogen-containing additive gases having various flow rates and energized at various powers, may also be used to effectively convert the unreacted precursors and by-products to soluble hydride species.

It has been discovered that by properly selecting the volumetric flow ratio of reactive gas to hazardous gas in the effluent, the hazardous gas reduction efficiency can be substantially and unexpectedly improved. For example, it has been discovered that when using an additive gas comprising a hydrogen-containing gas, the volumetric flow ratio of hydrogen atoms in the additive gas to chlorine atoms in the effluent 100 should be at least about 1:1.

A scrubber 320 comprising an enclosure 325 is provided in the effluent treatment apparatus 300. The scrubber comprises an inlet 327 connected to a foreline 336 which passes the hydrogenated effluent through the inlet 327 and into the enclosure 325. The scrubber 320 further comprises a water spray 321 to spray water through the hydrogenated effluent to dissolve the hydrogen chloride gas into the water to form a scrubbed effluent. In one version, a bypass valve 324 may be provided in or near the scrubber 320 to control the flow of effluent into, or to bypass, the scrubber 320. The bypass valve may optionally be under the control of the controller.

The combustor 330 comprises an enclosure 338 having an oxygenating treatment zone 340. The combustor 330 further comprises an inlet 344 connected to a foreline 347, which passes the scrubbed effluent through the inlet 344 and into the oxygenating treatment zone 340 of the enclosure 338. The combustor 330 also comprises an additive gas port 353 to introduce an additive gas comprising an oxygen-containing gas into the enclosure 338. Additive gas comprising oxygen or oxygenated additives from the additive gas source 360 enters the combustor 330 through the additive gas port 364. The additive gas source 360 is connected to the combustor 330 via foreline 370 and the flow of gas could be controlled with a control valve 372. The operation of the control valve 372 may be under the control of a controller 200, as will be described, or may be operated by hand.

The combustor 330 is composed of a gas impermeable material, such as a ceramic or metal material. For example, the enclosure 338 may be a cylinder composed of a ceramic material such as Al₂O₃. The cylinder has sufficient strength to withstand operating vacuum type pressures of up to 740 Torr. The cylinder can have a diameter of at least about 10 mm, and more preferably at least about 200 mm. Advantageously, the cylinder can be oriented linearly to the direction of flow of effluent through the scrubber 320 to reduce possible backflow of effluent that can occur through obstructions of the effluent path through the scrubber 320. The cylinder has a longitudinal central axis that is oriented parallel to the direction of the flow path of effluent. The length of the combustor 330 is sufficiently long to allow the effluent to remain resident in the cylinder for a sufficient time to substantially oxidize all of the hazardous compounds that may not have been removed by the scrubber 320. The exact length of the combustor 330 depends on a combination of factors including the diameter of the scrubber outlet and foreline 347, the composition and peak flow rate of the effluent, and the power level applied to the abatement plasma. For an effluent comprising Cl₂ at total flow of about 100 sccm, a sufficient resident time is at least about 0.1 seconds, and more preferably about 2 seconds. A suitable length of the combustor 330 that provides such a residence time, comprises a cylindrical tube having a cross-sectional diameter of from about 100 to about 800 mm, and a length of from about 10 cm to about 20 cm.

In one version, a bypass valve 342 may be provided in or near the combustor 330 to control the flow of effluent into, or to bypass, the combustor 330. The throttle valve 342 may optionally be under the control of the controller.

The combustor 330 further comprises a heater 363 to heat the reactant gases within the combustor 330. The heater 363 comprises heating elements and control circuitry. The heater 363 is capable of heating the combustor 330 to a temperature of at least about 500°C. Examples of heaters which may be used to heat the combustor 330 include heaters available from BH Thermal Corporation, Columbus, Ohio. The heater is capable of supplying from about 5 to about 10 KW of heating power. The additive gas source 360 provides oxygen or oxygenated additives which when heated or energized by the heater, react with the hazardous compounds which may remain in the effluent. The combustor 330 uses oxygen or oxygen additives to effectively oxidize unreacted compounds without concern for the formation of dioxins.

The effluent treatment apparatus 300 can comprise an infrared sensor 370 to generate a signal upon the detection of an infrared signature corresponding to carbon-hydrogen, carbon-halogen, or carbon-oxygen bonds, indicating the presence of carbon-containing gas in the effluent. This signal is then sent to the controller 200 which activates the hydrogenation reactor 310. An infrared sensor 370 is described, for example, in U.S. Patent No. 6,366,346 issued to Nowak et al., entitled "Method and Apparatus for Optical Detection of Effluent Composition", which is incorporated by reference herein in its entirety. The infrared sensor 370 is located in a gas line 326 between the gas exhaust port 170 of the process chamber 110 and the gas inlet 314 of the hydrogenation reactor 310. Another infrared sensor 370 can be located in the foreline 347 between the scrubber 320 and the combustor 330.

The sensor 370 detects the light emitted by the reactive species in the effluent and converts it into a voltage signal. The light emitted by the effluent indicates the types and concentrations of gases in the effluent because different gases will emit different wavelengths of light when excited in a plasma, and the amplitude of a detected wavelength provides an indication of the amount or concentration of a particular gas in the effluent stream. The sensor 370 can be any of a number of optical detectors, such as a phototransistor or photodiode. Although desirable in order to simplify data interpretation, it is not necessary for the sensor 370 response to be linear. The sensor 370 can also include various lens or filters as would be apparent to one of ordinary skill in the art. For example, a suitable filter is a band-pass filter centered at the infrared wavelength of interest. A suitable infrared sensor 370 is the model TPS434 NDIR gas analysis sensor available from Perkin Elmer, located in Fremont, California, in conjunction with an infrared filter, such a bandpass filter for wavelengths from 7.1 to 16.7 micrometers, or 3.0 to 3.6 micrometers, available from Barr Associates Inc., located in Westford, MA.

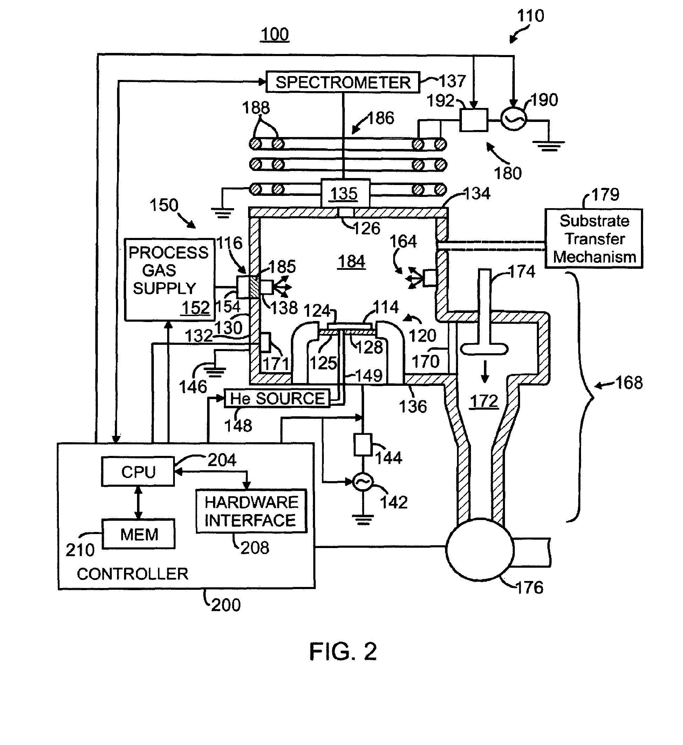

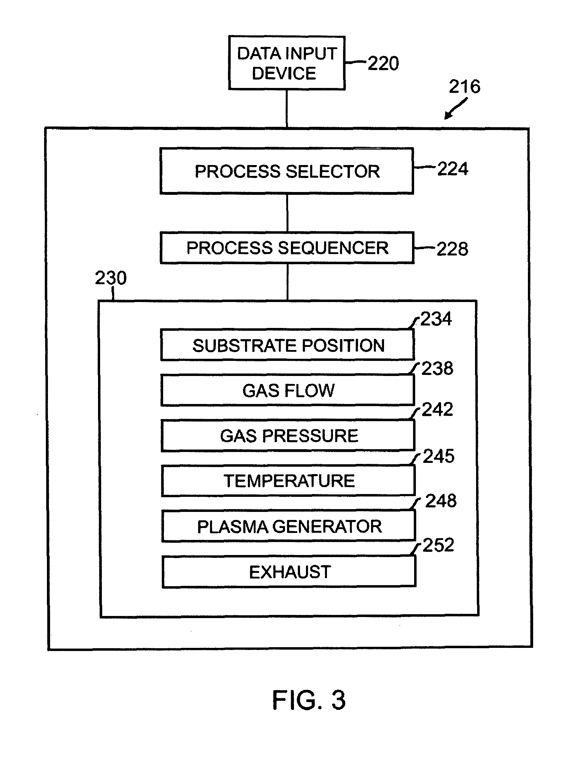

A controller 200 can be used to operate a substrate processing apparatus 100 comprising both the process chamber 110 and the effluent treatment apparatus 300, as shown in FIGS. 2 and 3. The controller 200 comprises electronic hardware including integrated circuits that are suitable for operating both the process chamber 110 and the apparatus 300. The controller 200 is adapted to accept data input, run algorithms, produce data output signals, detect data signals from sensors 370 and other chamber components, and monitor process conditions within the substrate processing apparatus 100. The controller 200 comprises effluent treatment control instruction sets which comprise program code to receive a signal from the infrared sensor 370 upon detection of the presence of carbon-containing gas in the effluent. The controller 200 receives a signal from the infrared sensor 370 and adjusts operation of any one of the hydrogenation reactor 310, scrubber 320 or combustor 330 in relation to the signal. The effluent treatment control also has safety code to turn off the effluent treatment apparatus 300 should unsafe conditions occur or be measured.

The controller 200 further comprises gas flow instruction sets which comprise program code to control a gas valve to distribute specific volumetric flow rates of particular gases. In one version, the controller 200 comprises program code to control a gas valve to set the volumetric flow rate of hydrogen-containing gas introduced into the additive gas port 315 of the hydrogenation reactor 310 such that the ratio of hydrogen to chlorine atoms in the hydrogenation reactor 310 is at least about 1:1. In another version, the controller 200 comprises program code to control a gas valve to set the volumetric flow rate of hydrogen-containing gas introduced into the additive gas port 315 of the hydrogenation reactor 310 such that the ratio of hydrogen to chlorine atoms in the hydrogenation zone 316 is from about 1.5:1 to about 3:1.

In the effluent treatment process, the effluent is passed from the exhaust port 170 of the process chamber 110 to the hydrogenation reactor 310 of the effluent treatment apparatus 300. Notably, the methodology described here is applicable to all abatement apparatuses including plasma and thermal based technologies. In this reactor 310, an additive gas comprising a hydrogen-containing gas is added to the effluent gas through the additive gas port 315. The hydrogen-containing gas reacts with the unreacted chlorine-containing effluent gas to form soluble hydride species, such as hydrogen chloride gas. There should be little or no oxygen present in the effluent, otherwise the oxygen will react with the hydrogen-containing gas to form water. When the chlorine-containing gas reacts with hydrogen-containing gas, the formation of dioxins downstream of the hydrogenation reactor 310, is minimized. Thus, the hydrogen-containing gases must be added in a sufficient quantity to substantially react with all the residual chlorine-containing gas. That is, the hydrogen-containing gas is added in a sufficient quantity that the ratio of hydrogen to chlorine atoms in the hydrogenation zone 316 is sufficiently high to convert substantially all of the unsaturated hydrocarbon gases to saturated hydrocarbon gases. A suitable hydrogen-containing gas is H₂. A suitable ratio of hydrogen to chlorine atoms in the hydrogenation zone 316 is at least about 1.2:1, and even from about 1.5:1 to about 3:1.

The hydrogenation reactor 310 can also be used to convert unsaturated or complex hydrocarbon gases to fully saturated hydrocarbon gases, which are easier to abate in conventional downstream combustors 330 (as described below). For example, unsaturated hydrocarbon gases such as ethylene (C₂H₄) and propylene (C₃H₆) may be converted to saturated hydrocarbon gases such as CH₄, C₂H₆ and C₃H₈, in the hydrogenation reactor 310. The hydrogen-containing gas is added in a sufficient quantity that the ratio of hydrogen to chlorine atoms in the hydrogenation zone 316 is sufficiently high to convert substantially all of the unsaturated hydrocarbon gases to saturated hydrocarbon gases.

Thereafter, the hydrogenated effluent, now containing a soluble hydride species, such as hydrogen chloride gas, is passed through a scrubber 320 which removes the soluble hydrogen chloride gas by spraying water through the scrubbed effluent gas. The water dissolves the hydrogen chloride gas into the water, thus substantially removing the hydrogen chloride gas from the effluent.

If the scrubbed effluent is free of chlorine containing species, but still contains other hazardous or flammable gases, it can be further processed in a combustor 330. For example, residual hydrocarbon by-products can be burned in a combustion zone 340 by heating the scrubbed effluent while adding an oxygen-containing gas into the combustion zone 340 to form a treated effluent. Suitable oxygen-containing gases include oxygen and oxygenated additives such as H₂O. In the combustor 330, the oxygen-containing gas effectively oxidizes unreacted gaseous compounds without the formation of dioxins. As another example, effluent comprising saturated hydrocarbon gases can be fully oxidized by combustion in the combustor 330 in an oxygen environment to form CO₂ and H₂O. Gases in the combustor 330 are processed by heating the combustion zone 340 to a temperature of at least about 500°C.

The novel solution provided above effectively abates the unreacted reactants and by-products produced by chlorine-based semiconductor manufacturing processes, while preventing or significantly reducing the formation of toxic dioxins. By separating the chamber effluent treatment processes for reacting the chlorine-containing species from the chamber, and for reacting other hydrocarbon-containing species, the reaction of hydrocarbon and chlorine to form toxic dioxins, is significantly reduced.

An embodiment of a substrate processing apparatus 100 capable of processing a substrate 114 and producing an effluent comprising hydrocarbon gas and chlorine-containing gas to be treated in the effluent treatment apparatus, is illustrated in FIG. 2. The substrate processing apparatus 100 comprises a process chamber 110 for processing a substrate 114. Such a process chamber 110, may be, for example, a decoupled plasma source (DPS® II) type chamber commercially available from Applied Materials Inc., Santa Clara, California. A modified version of a DPS II chamber is described in U.S. Patent Application Publication No. 2006/0028646 A1 issued to Davis et al., which is incorporated by reference herein in its entirety. The chamber is generally used as a processing module of the CENTURA® processing system, also available from Applied Materials, Inc. of Santa Clara, California.

A typical process chamber 110 comprises a housing 116 comprising enclosure walls 130 that include sidewalls 132, a bottom wall 136 and a ceiling 134. The ceiling 134 may comprise a substantially arcuate shape, or in other versions, a dome shaped, substantially flat, or multi-radius shape. The walls 130 are typically fabricated from a metal, such as aluminum, or ceramic materials. The ceiling 134 and/or sidewalls 132 can also have a radiation permeable window 126 that allows radiation to pass through for monitoring processes being conducted in the chamber 110, by, for example, beam forming optics 135 that collect the reflectance from the substrate 114. The collected signals from the beam forming optics 135 are then sent to the spectrometer 137 for signal analysis.

The chamber 110 further comprises a substrate support 120 to support a substrate 114 in the chamber. The substrate support 120 typically comprises an electrostatic chuck, which comprises a dielectric which at least partially covers an electrode 125, and which may include a substrate receiving surface 124. The receiving surface 124 may have apertures or grooves (not shown) to provide a heat transfer gas, such as helium, from a helium gas source 148 through a conduit 149 through the substrate support 120 to control the temperature of the substrate 114. The electrode 125 is capable of being electrically charged to generate an electrostatic charge for electrostatically holding the substrate 114 to the electrostatic chuck. The electrode 125 is also capable of serving as a process electrode 125. The electrode 125 can be a single conductor or a plurality of conductors, and can be made from a metal such as tungsten, tantalum or molybdenum. The substrate support or cathode 120 is coupled through a second matching network 144 to a biasing power source 142. The biasing power source 142 generally is capable of producing up to 10 kW at a frequency of approximately 13.56 MHz. The biasing power may be either continuous or pulsed power. In other embodiments, the biasing power source 142 may be a DC or pulsed DC source.

The gas distributor 138 enclosed within the process chamber 110 serves to introduce a process gas into the housing 116 to process a substrate114 placed on the substrate support 120. The process gas is provided by a gas delivery system 150 that includes a process gas supply 152 comprising sources for various gases. Each gas source has a conduit with a gas flow control valve such as a mass flow controller, to pass a set flow rate of the gas therethrough. The conduits feed the gases to a mixing manifold 154 in which the gases are mixed to form a desired process gas composition. The mixing manifold 154 feeds the gas distributor 138 having gas outlets 164 in the chamber 106. The gas outlets 164 may pass through the chamber sidewalls 132 proximate to a periphery of the substrate support 120 or may pass through the ceiling 134, terminating above the substrate 114.

Spent process gas and byproducts are exhausted from the chamber 110 through an exhaust system 168 which includes one or more exhaust ports 170. The exhaust ports 170 receive spent process gas and chamber effluent comprising unreacted process gas, passing the spent gas and chamber effluent to an exhaust conduit 172, in which there is a throttle valve 174 to control the pressure of the gas in the chamber 110. The exhaust conduit 172 feeds one or more exhaust pumps 176, used to remove the chamber effluent from the chamber 110. The vacuum pump 176 may have a throttle valve 174 to control the exhaust rate of gases from the chamber 110.

The process gas is energized to process the substrate 114 by a plasma generator 180. The plasma generator 180 couples energy to the process gas in a process zone 184 of the chamber 110 (as shown) or in a remote zone upstream from the chamber 110 (not shown). By "energized process gas," it is meant that the process gas is activated or energized to form one or more dissociated gas species, non-dissociated gas species, ionic gas species and neutral gas species. In one version, the plasma generator 180 comprises an antenna 186 comprising at least one inductor coil 188 which has a circular symmetry about the center of the chamber 106. Typically, the antenna 186 comprises solenoids having from about 1 to about 20 turns with a central axis coincident with the longitudinal vertical axis that extends through the process chamber 110. When the antenna 186 is positioned near the ceiling 134 of the chamber 110, the adjacent portion of the ceiling 134 may be made from a dielectric material, such as silicon dioxide, which is transparent to RF or electromagnetic fields. The antenna 186 is powered by an antenna current supply 190 and the applied power is tuned by an RF match network 192. The antenna current supply 190 provides, for example, RF power to the antenna 186 at a frequency of typically about 50 KHz to about 60 MHz, and more typically about 13.56 MHz, and does so at a power level of from about 100 to about 5000 Watts.

When an antenna 186 is used in the chamber 110, the walls 130 include a ceiling 134 made from an induction field permeable material, such as aluminum oxide or silicon dioxide, to allow the inductive energy from the antenna 186 to permeate through the walls 130 or ceiling 134. A suitable semiconductor material which may also be used is doped silicon. For doped silicon semiconducting ceilings, the temperature of the ceiling is preferably held in a range at which the material provides semiconducting properties, for example, from about 100 K to about 600 K. The temperature of the ceiling 134 can be controlled using a plurality of radiant heaters such as tungsten halogen lamps and a thermal transfer plate in contact with the ceiling 134. The thermal transfer plate may be made of aluminum or copper, with passages (for a heat transfer fluid to flow therethrough. A heat transfer fluid source supplies heat transfer fluid to the passages to heat or cool the thermal transfer plate as needed to maintain the chamber 110 at a constant temperature. The thermal transfer plate may be supported at a distance above the antenna 186 of at least one half the overall height of the antenna 186 to reduce inductive coupling between the antenna 186 and the plasma, which would otherwise result from their close proximity to the conductive plate.

In one version, the plasma generator 180 is also a pair of electrodes 128 that may be capacitively coupled to provide a plasma initiating energy to the process gas or to impart a kinetic energy to energize the gas species. Typically, one electrode 128 is in the support 120 below the substrate 114 and the other electrode 128 is a wall, for example, the sidewall 130 or ceiling 134 of the chamber 110. For example, the electrode 128 may be a ceiling 134 made of a semiconductor that is sufficiently electrically conductive to be biased or grounded to form an electric field in the chamber 110, while still providing low impedance to an RF induction field transmitted by the antenna 186 above the ceiling 134. A suitable semiconductor comprises silicon doped to have an electrical resistivity of, for example, less than about 500 Ω-cm at room temperature. Generally, the electrodes 128 may be electrically biased relative to one another by a biasing voltage supply 142 that provides an RF bias voltage to the electrodes 128 to capacitively couple the electrodes 128 to one another. The applied RF voltage is tuned by an RF match network 144. The RF bias voltage may have frequencies of about 50 kHz to about 60 MHz, or as in one version, about 13.56 MHz. The power level of the RF bias current is typically from about 50 to about 3000 Watts.

The chamber 110 may be operated by a controller 200 comprising a computer 204 that sends instructions via a hardware interface 208 to operate the chamber components, including the substrate support 120, the gas flow control valves, the gas distributor 138, the plasma generator 180, the gas exhaust port 170 and the throttle valve 174. The process conditions and parameters measured by the different detectors in the chamber 110 are sent as feedback signals by control devices such as the gas flow control valves, pressure monitor 171, throttle valve 174, and other such devices, and are transmitted as electrical signals to the controller 200.

The controller 200 comprises electronic hardware including electrical circuitry comprising integrated circuits that are suitable for operating the chamber 110 and its peripheral components. Generally, the controller 200 is adapted to accept data input, run algorithms, produce useful output signals, detect data signals from the detectors and other chamber components, and to monitor or control the process conditions in the chamber 110. For example, the controller 200 may comprise a computer 204 comprising (i) a central processing unit (CPU), such as for example, a conventional microprocessor from the INTEL Corporation, that is coupled to a memory 210 that includes a removable storage medium, such as a CD or floppy drive, a non-removable storage medium, such as a hard drive, ROM, and RAM; (ii) application specific integrated circuits (ASICs) that are designed and preprogrammed for particular tasks, such as retrieval of data and other information from the chamber 110 or operation of particular chamber components; and (iii) interface boards that are used in specific signal processing tasks, comprising, for example, analog and digital input and output boards, communication interface boards and motor controller boards. The user interface between an operator and the controller 200 can be, for example, via a display and a data input device 220, such as a keyboard or light pen. To select a particular screen or function, the operator enters the selection using the data input device 220 and can review the selection on the display.

In one version, the controller 200 comprises a computer program 216 that is readable by the computer 204 and may be stored in the memory 210. The computer program 216 generally comprises process control software comprising program code to operate the chamber 110 and its components, process monitoring software to monitor the processes being performed in the chamber 110, safety systems software and other control software. The computer program may be written in any conventional programming language, such as for example, assembly language, C++, Pascal, or Fortran. Suitable program code is entered into a single file or multiple files using a conventional text editor and stored or embodied in computer-usable medium of the memory 210. If the entered code text is in a high level language, the code is compiled and the resultant compiler code is then linked with an object code of pre-compiled library routines. To execute the linked, compiled object code, the user invokes the object code, causing the CPU to read and execute the code to perform the tasks identified in the program.

An illustrative block diagram of a hierarchical control structure of a specific embodiment of a computer program 216 according to the present invention is shown in FIG. 3. Using a data input device 220, for example, a user enters a process set and chamber number into the computer program 216 in response to menus or screens on the display that are generated by a process selector 224. The computer program 216 includes instruction sets to control the substrate position, gas flow, gas pressure, temperature, RF power levels and other parameters of a particular process, as well as instructions sets to monitor the chamber process. The process sets are predetermined groups of process parameters necessary to carry out specified processes. The process parameters are process conditions, including gas composition, gas flow rates, temperature, pressure, and gas energizer settings such as RF or microwave power levels. The chamber number reflects the identity of a particular chamber when there are a set of interconnected chambers on a platform.

A process sequencer 228 comprises instruction sets to accept a chamber number and set of process parameters from the computer program 216 or the process selector 224, and to control its operation. The process sequencer 228 initiates execution of the process set by passing the particular process parameters to a chamber manager 230 that controls multiple tasks in a chamber 110. The chamber manager 230 may include instruction sets, such as, for example, substrate positioning instruction sets 234, gas flow control instruction sets 238, gas pressure control instruction sets 242, temperature control instruction sets 245, plasma generator control instruction sets 248, and exhaust control instruction sets 252.

The substrate positioning instruction sets 234 comprise code for controlling chamber components that are used to load a substrate 114 onto the substrate support 120, and optionally, to lift a substrate 114 to a desired height in the chamber 110.

The gas flow control instruction sets 238 comprise code for controlling the flow rates of different constituent gases that make up the process gas. For example, the gas flow control instruction sets 238 may regulate the opening size of the gas flow control valves to obtain the desired gas flow rates from the gas outlets 164 into the chamber 110.

The gas pressure control instruction sets 242 comprise program code for controlling the pressure in the chamber 110, for example, by regulating the open/close position of the throttle valve 174.

The temperature control instruction sets 245 may comprise, for example, code for controlling the temperature of the substrate 114 during etching and/or code for controlling the temperature of walls 130 of the chamber 110, such as the temperature of the ceiling 134.

The plasma generator control instruction sets 248 comprise code for setting, for example, the RF power level applied to the electrodes 128 or to the antenna 186; the power applied to energize the process gas into a plasma.

The exhaust control instruction sets 252 comprise code for controlling the opening of the throttle valve 174 to exhaust effluent from the chamber 110 through the gas exhaust port 170.

While described as separate instruction sets for performing a set of tasks, it should be understood that each of these instruction sets can be integrated with one another, or the tasks of one set of program code integrated with the tasks of another to perform the desired set of tasks. Thus, the controller 200 and the computer program 216 described herein should not be limited to the specific version of the functional routines described herein; any other set of routines or merged program code that perform equivalent sets of functions are also in the scope of the present invention. Also, while the controller 200 is illustrated with respect to one version of the chamber 110, it may be used for any chamber compatible for executing the invention described herein.

The apparatus 100 illustrated herein can be used to process material on a substrate 114, for example, to etch material from the substrate 114, remove contaminant deposits or residues deposited on surfaces in the chamber 110, such as on the surfaces of walls 130 of the chamber 110 and the surfaces of components in the chamber 110, and perform post processing treatment of a substrate 114 or the like. For example, in one version, the apparatus 100 may be used to etch a substrate 114 comprising one or more layers of material. Such layers are often superimposed on one another and may comprise dielectric layers comprising, for example, silicon dioxide, undoped silicate glass, phosphosilicate glass (PSG), borophosphosilicate glass (BPSG), carbon-doped silicate glass (CSG), silicon nitride or TEOS deposited glass; semiconducting layers comprising, for example, silicon-containing layers such as polysilicon or a silicon compound; and conductive layers such as metal-containing layers comprising, for example, aluminum, copper, or metal silicide such as tungsten silicide and cobalt silicide. Suitable etchant gases for etching layers on the substrate 105, include for example, HCl, BCl₃, CHCl₃, CₙHₙ, CₙHₙ₊₂, CₙH₂ₙ₊₂ (where "n" is any integer from 1 to 4), ClₓBr_{y}, ClₓF_{y} ( where "x" and "y" are any combination of integers from 0 to 3), XeCl₂, BiClₓF_{y}, NCl₃, NClₓF_{y}, NClₓBr_{y}, NO₂ClₓF_{y}, NOClₓF_{y} (where "x" and "y" are any combination of integers from 0 to 3), CₙH_{y}Clₓ, CₙH_{y}ClₓF_{z}, CₙH_{y}ClₓBr_{z}Fᵥ (where "x", "y", "z" and "v" are any combination of integers from 0 to 3 and "n" is any integer from 1 to 4), CCl₃OCCl₃, AlCl₃, HBr, Br₂, Cl₂, CCl₄, SiCl₄, SF₆, F, NF₃, HF, CF₃, CF₄, CH₃F, CHF₃, C₂H₂F₂, C₂H₄F₆, C₂F₆, C₃F₈, C₄F₈, C₂HF₅, C₄F₁₀, CF₂Cl₂, CFCl₃, O₂, N₂, He and mixtures thereof. The etchant gas is selected to provide high etch rates and highly selective etching of the particular layers or materials that are being etched. When multiple layers are sequentially etched, etchant gas compositions may be sequentially introduced into the chamber 110 to etch each particular layer. Further, while the effluent treatment apparatus 300 is illustrated in the context of an etching process, it should be understood that the effluent treatment apparatus 300 can be used with other substrate fabrication processes and chambers.

A substrate 114 is placed by a substrate transfer mechanism 179, such as a wafer blade, onto the substrate support 120 in the process zone 184 of the process chamber 110. To etch one or more of the layers on the substrate 114 in the process chamber 110, process gas comprising etchant gas comprising a hydrocarbon gas and a chlorine-containing gas is introduced from the gas supply 152 into the process zone 184. In one version, the hydrocarbon gas comprises one or more of CₙHₙ, CₙHₙ₊₂, CₙH₂ₙ₊₂, where n is any integer from 1 to 4. In one version, the chlorine-containing gas comprises one or more of Cl₂, CCl₄, SiCl₄, HCl, BCl₃, CHCl₃, ClₓBr_{y}, ClₓF_{y}, XeCl₂, BiClₓF_{y}, NCl₃, NClₓF_{y}, NClₓBr_{y}, NO₂ClₓF_{y}, NOClₓF_{y}, CₙH_{y}Clₓ, CₙH_{y}ClₓF_{z}, CₙH_{y}ClₓBr_{z}Fᵥ CCl₃OCCl₃, AlCl₃, CF₂Cl₂, and CFCl₃, where x, y, z and v are any integers from 0 to 3 and n is any integer from 1 to 4.

Process gases are supplied to the process zone 184 from a gas panel 185 having entry ports leading to a gas distributor 138. The orifices of the gas distributor 138 release the various gases to form a gaseous mixture. The gaseous mixture is ignited into a plasma in the chamber 110 by a plasma generator 180 comprising radical species such as atomic chlorine and other etchant species, as well as hydrocarbon or boron-containing species that polymerize to enhance the anisotropic etch process. The gas may be energized by inductively and/or capacitively coupling energy into the process zone 184 of the chamber 110, or by applying microwaves thereto or to an etchant gas in a remote zone of a remote chamber (not shown), that is at a location remote from the process zone 184. By "energized process gas" it is meant that the process gas is activated or energized so that one or more dissociated species, non-dissociated species, ionic species and neutral species are excited to higher energy states, in which they are more chemically reactive. In one version, the plasma generator 180 applies power from the biasing source power 142 to the inductive coil element 188 and the cathode 128, respectively. The pressure within the interior of the chamber 110 is controlled using a throttle valve 174 and a vacuum pump 176. Typically, the chamber wall 130 is coupled to an electrical ground 146. The temperature of the wall 130 is controlled using liquid-containing conduits that run through the wall.

During the etching process, the temperature of the substrate 114 is controlled by stabilizing a temperature of the substrate support 120. Helium gas from a gas source 148 can be provided via a gas conduit 149 to channels formed in the substrate support surface 124 under the substrate 114. The helium gas is used to facilitate heat transfer between the support 120 and the substrate 114. During processing, the substrate support 120 may be heated by a resistive heater within the substrate support 120, to a steady state temperature, and then the helium gas may be utilized to facilitate uniform heating of the substrate 114. Using such thermal control, the substrate 114 is maintained at a temperature of from about 20°C to 350°C.

The energized etchant gas etches one or more layers on the substrate 114 to form volatile gaseous species that are exhausted from the chamber 110 by exhaust system 168. After processing, an effluent comprising unreacted process gas comprising the hydrocarbon species and the chlorine-containing gas is exhausted from the process zone 184 through the gas exhaust port 170. The effluent can now be treated in the effluent treatment apparatus 300 to remove remaining hazardous gases and by-products resulting from the etch process.

Those skilled in the art will understand that other process chambers may be used to practice the invention, including chambers with remote plasma sources, electron cyclotron resonance (ECR) plasma chambers, and the like.

Although the present invention has been described in considerable detail with regard to certain preferred versions thereof, other versions are possible. For example, the scrubber 320 that sprays water to remove the HCl from the effluent gas may be interchangeable with a resin bed scrubber performing the same function. Also, the apparatus 100 of the present invention can be used in and/or with other chambers and for other processes, such as, for example, physical vapor deposition and chemical vapor deposition. Therefore, the appended claims should not be limited to the description of the preferred versions contained herein.

The invention is also directed to an apparatus for carrying out the disclosed methods and including apparatus parts for performing each described method steps. These method steps may be performed by way of hardware components, a computer programmed by appropriate software, by any combination of the two or in any other manner. Furthermore, the invention is also directed to methods by which the described apparatus operates. It includes method steps for carrying out every function of the apparatus.

## Claims

1. A method of processing a substrate and treating an effluent comprising hydrocarbon gas and chlorine-containing gas, the method comprising:
(a) exposing a substrate to a plasma of a process gas comprising a hydrocarbon gas and a chlorine-containing gas;
(b) exhausting from the process zone, a chamber effluent comprising unreacted process gas comprising the hydrocarbon gas and the chlorine-containing gas;
(c) exposing the chamber effluent to hydrogen-containing gas to form a hydrogenated effluent comprising hydrogen chloride gas;
(d) scrubbing the hydrogenated effluent with water to dissolve the hydrogen chloride gas in the water to form a scrubbed effluent that is substantially absent hydrogen chloride gas; and
(e) combusting the scrubbed effluent by heating the scrubbed effluent while adding an oxygen-containing gas to form a treated effluent.

2. A method according to claim 1 wherein in (b), the hydrocarbon gas comprises one or more of CₙHₙ, CₙHₙ₊₂, CₙH₂ₙ₊₂, where n is any integer from 1 to 4;

3. A method according to claim 1 wherein in (b), the chlorine-containing gas comprises one or more of Cl₂, CCl₄, SiCl₄, HCl, BCl₃, CHCl₃, ClₓBr_{y}, ClₓF_{y}, XeCl₂, BiClₓF_{y}, NCl₃, NClₓF_{y}, NClₓBr_{y}, NO₂ClₓF_{y}, NOClₓF_{y}, CₙH_{y}Clₓ, CₙH_{y}ClₓF_{z}, CₙH_{y}ClₓBr_{z}Fᵥ CCl₃OCCl₃, AlCl₃, CF₂Cl₂, and CFCl₃, where x, y, z and v are any integers from 0 to 3 and n is any integer from 1 to 4.

4. A method according to claim 1 wherein in (c), the hydrogen-containing gas comprises at least one of the following characteristics:
(i) the hydrogen-containing gas is added in a sufficient quantity that the ratio of hydrogen to chlorine atoms is at least about 1:1;
(ii) the hydrogen-containing gas is added in a sufficient quantity that the ratio of hydrogen to chlorine atoms is from about 1.2:1 to about 3:1.

5. A method according to claim 1 wherein the hydrogen-containing gas comprises H₂.

6. A method according to claim 5 wherein the hydrogen-containing gas is added in a sufficient quantity that the ratio of hydrogen to chlorine atoms is sufficiently high to convert substantially all of the unsaturated hydrocarbon gases to saturated hydrocarbon gases.

7. A method according to claim 1 wherein (d) comprises spraying water through the scrubbed effluent gas.

8. A method according to claim 1 wherein (e) comprises at least one of the following:
(i) adding an oxygen-containing gas comprising oxygen or H₂O; and
(ii) heating the combustion zone to a temperature of at least about 500°C.

9. A substrate processing apparatus capable of processing a substrate and treating an effluent comprising hydrocarbon gas and chlorine-containing gas, the apparatus comprising:
(a) the process chamber comprising
(i) a housing enclosing a substrate support;
(ii) a gas distributor to introduce a process gas into the housing, the process gas comprising a hydrocarbon gas and a chlorine-containing gas,
(iii) a plasma generator to form a plasma of the process gas, and
(iv) a gas exhaust port to remove chamber effluent comprising unreacted process gas from the housing;
(b) an effluent treatment apparatus comprising:
(i) a hydrogenation reactor comprising an enclosure, an inlet to receive the chamber effluent from the gas exhaust port of the process chamber, and an additive gas port to introduce a hydrogen-containing gas into the hydrogenation reactor to form a hydrogenated effluent comprising hydrogen chloride gas;
(ii) a scrubber comprising an enclosure, an inlet to receive the hydrogenated effluent, and a water spray to spray water through the hydrogenated effluent to dissolve the hydrogen chloride gas into the water to form a scrubbed effluent; and
(iii) the combustor comprising an enclosure, an inlet to receive the scrubbed effluent, an additive gas port to introduce an oxygen-containing gas into the combustor, and a heater to heat the combustor; and
(c) a controller to operate the process chamber and effluent treatment apparatus to process a substrate and treat the chamber effluent.

10. An apparatus according to claim 9 wherein the controller comprises program code to control a gas valve to set the volumetric flow rate of hydrogen-containing gas introduced into the additive gas port of the hydrogenation reactor such that the ratio of hydrogen to chlorine atoms in the hydrogenation reactor is at least about 1:1.

11. An apparatus according to claim 10 wherein the controller comprises program code to control a gas valve to set the volumetric flow rate of hydrogen-containing gas introduced into the additive gas port of the hydrogenation reactor such that the ratio of hydrogen to chlorine atoms in the hydrogenation zone is from about 1.2:1 to about 3:1.

12. An apparatus according to claim 9 wherein the heater is capable of heating the combustor to a temperature of at least about 500°C.

13. An apparatus according to claim 9 wherein the heater is capable of supplying from about 5 to about 10 KW of heating power.

14. An apparatus according to claim 9 further comprising an infrared sensor to generate a signal upon detection of an infrared signature, the infrared sensor comprising at least one of the following:
(i) capable of detecting light emitted by reactive species in the effluent and converts it into a voltage signal, wherein the light indicates the types and concentrations of gases in the effluent;
(ii) capable of generating a signal upon detection of an infrared signature indicating the presence of hydrocarbon gas in the effluent; and
(iii) capable of detecting an infrared signature corresponding to carbon.

15. An apparatus according to claim 14 wherein the controller receives a signal from the infrared sensor and adjusts operation of any one off the hydrogenation reactor, scrubber or combustor in relation to the signal.

16. An apparatus according to claim 9 wherein the plasma generator comprises at least one of:
(a) an antenna; or
(b) a pair of electrodes which are capacitively coupled to provide energy to the process gas to form a plasma.
